(19) Europäisches Patentamt / European Patent Office / Office européen des brevets

(11) **EP 4 417 653 B1**

(12) **EUROPEAN PATENT SPECIFICATION**

(45) Date of publication and mention
of the grant of the patent:
**04.03.2026  Bulletin 2026/10**

(21) Application number: **22903780.9**

(22) Date of filing: **28.07.2022**

(51) International Patent Classification (IPC):
**C09D 11/322** (2014.01)     **C09D 17/00** (2006.01)
**C09B 48/00** (2006.01)     **C09C 3/00** (2006.01)
**C09B 67/22** (2006.01)     **C09B 67/20** (2006.01)
**C09B 67/46** (2006.01)

(52) Cooperative Patent Classification (CPC):
**C09D 11/322; C09B 67/0036; C09B 67/0067;
C09B 67/009; C09D 17/003**

(86) International application number:
**PCT/JP2022/029052**

(87) International publication number:
**WO 2023/105844 (15.06.2023 Gazette 2023/24)**

(54) **QUINACRIDONE PIGMENT, PIGMENT DISPERSION, AND AQUEOUS INKJET INK**

CHINACRIDONPIGMENT, PIGMENTDISPERSION UND WÄSSRIGE TINTENSTRAHLTINTE

PIGMENT DE QUINACRIDONE, DISPERSION DE PIGMENT, ET ENCRE AQUEUSE POUR JET
D'ENCRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **07.12.2021   JP 2021198358**

(43) Date of publication of application:
**21.08.2024   Bulletin 2024/34**

(73) Proprietor: **DIC Corporation
Tokyo 174-8520 (JP)**

(72) Inventors:
• **SUGIURA Kenichi
Kamisu-shi, Ibaraki 314-0193 (JP)**
• **SUNOUCHI Kozue
Kamisu-shi, Ibaraki 314-0193 (JP)**
• **KUDO Arata
Kamisu-shi, Ibaraki 314-0193 (JP)**

(74) Representative: **TBK
Bavariaring 4-6
80336 München (DE)**

(56) References cited:
WO-A1-2012/099203      JP-A- 2003 201 419
JP-A- 2004 035 667      JP-A- 2016 216 568
JP-A- 2020 084 026      US-A1- 2021 071 015

**Description**

Technical Field

The present invention relates to a quinacridone pigment, a pigment dispersion containing the same, and an aqueous inkjet ink.

Background Art

Inkjet (IJ) is a system in which ink is guided to a thin nozzle, drawn out as a high-speed ink beam, and printed while being controlled in accordance with character and graphic signals and is a method of printing widely utilized regardless of industrial use or home use. IJ inks include solvent-based, UV-curable, aqueous dye-based, and aqueous pigment-based IJ inks, and aqueous pigment IJ inks in particular have advantages in terms of safety and environmental friendliness over solvent-based, UV-curable, and aqueous dye-based IJ inks and are thus particularly expected to grow in terms of addressing sustainability.

Meanwhile, as IJ printing is gaining higher speed and higher precision year by year, the level of requirements required for pigments is also rising. One of the key performances required for pigments in IJ inks is dispersion stability that can tolerate complicated ink design. To improve dispersion stability, companies have advanced development by devising innovations such as derivative treatment, surface treatment, and particle size control of pigments.

Pigments used in IJ printing include condensed polycyclic organic pigments such as phthalocyanine-based pigments and quinacridone-based pigments in addition to carbon black (CB) and azo-based pigments. Among them, when condensed polycyclic organic pigments such as phthalocyanine-based pigments and quinacridone-based pigments are used, problems related to flowability are generally noticeable, not only in IJ uses, and surface treatment has been considered for condensed polycyclic organic pigments to improve flowability. Examples of the surface treatment include pigment derivative treatment, rosin treatment, surfactant treatment, resin-based dispersant treatment, and plasma treatment. However, even with these methods, inks may have high viscosity or flowability reduction caused by the thickening (viscosity increase) of inks in storage may occur depending on their uses.

Given these circumstances, a method has been developed of obtaining a β type copper phthalocyanine pigment composition having an appropriate contact angle with water and diethylene glycol giving good dispersibility by using a phthalocyanine-based pigment as a condensed polycyclic organic pigment and a specific phthalimide methyl copper phthalocyanine derivative in combination (PTL 1).

As a method of pigment surface treatment in aqueous dispersion pigments, a method is known in which hydrogen peroxide water containing phthalocyanine is put into a reaction vessel, argon gas is passed through the solution in this reaction vessel, the reaction vessel is immersed in a water tank with certain water in it, and ultrasonic waves are applied (PTL 2). Apart from the above, there are many patents on hydrophilization and self-dispersion of a pigment surface for carbon black (CB), but there are few patents on hydrophilization treatment of the pigment surface for quinacridone pigments, and patents describing achieving both dispersion stability and saturation in aqueous IJ ink uses in particular are not found.

Citation List

Patent Literature

PTL 1: Japanese Unexamined Patent Application Publication No. 2006-126440
PTL 2: Japanese Unexamined Patent Application Publication No. 2003-201419

Summary of Invention

Technical Problem

The present invention provides an innovative quinacridone pigment that can exhibit even better viscosity stability than conventional pigments and also maintain high saturation in aqueous IJ ink uses by modifying a quinacridone pigment surface to appropriately control the hydrophilic parameter of the pigment. If high viscosity stability can be exhibited, the ink can be used even when it is stored for a long term, and more latitude in solvent type and ratio that can be used in inks can be allowed, thus increasing the degree of freedom in ink design and making it possible to produce excellent aqueous IJ inks.

Solution to Problem

The inventors of the present invention have earnestly studied in order to find the above innovative quinacridone pigment to find out that viscosity stability in ink improves by modifying a pigment surface to hydrophilize it. The assumed mechanism of the present invention is as follows.

In pigment dispersion in an aqueous system, steps affected by a pigment include (1) a step in which the pigment gets wet and (2) a dispersion stabilization step (in the present invention, a step of adsorbing a dispersing resin to the pigment surface). The phenomena that occur in the steps (1) and (2) are considered as follows.

(1) Hydrophilization of the pigment surface improves wettability (a water-soluble solvent can easily penetrate into microscopic gaps of a pigment particle flocculate), which reduces the cohesive force between particles and makes them easier to be broken up by the mechanical force of a dispersing machine.
(2) Furthermore, in an aqueous system in which the dispersing resin adsorbs to the pigment, by hydrophilizing the surface of the quinacridone pigment, which is hydrophobic, interaction with the dispersing resin becomes strong, and higher dispersion stability and viscosity stability can be exhibited.

Meanwhile, this study has made it clear that excessive modification of the pigment surface deteriorates the hue (saturation) of the pigment. Although the detailed mechanism is unknown, it is presumed that modification of the pigment surface, that is, electronic and steric changes in the chemical structure of the pigment cause changes in the electronic state in single molecules and changes in interaction between molecules, resulting in hue change.

In the present invention, the balance between the improvement in dispersion stability and viscosity stability and the hue change described above has been studied, and by focusing on a specific surface ratio between water vapor and nitrogen and controlling it to an appropriate range, a pigment having higher viscosity stability than before while limitedly reducing the hue change has been successfully developed.

That is, the present invention relates to:

"Item 1. A quinacridone pigment with a specific surface area ratio between water vapor and nitrogen of 0.270 or more and less than 0.430,
wherein the quinacridone pigment is C.I. Pigment Violet 19, or a solid solution of C.I. Pigment red 122 and C.I. Pigment Violet 19.
Item 2. A pigment dispersion containing the quinacridone pigment according to Item 1 and a solvent.
Item 3. An aqueous inkjet (IJ) ink containing the pigment dispersion according to Item 2."

Advantageous Effects of Invention

The quinacridone pigment of the present invention can achieve both viscosity stability of ink and the saturation of printed matter especially when used as an aqueous IJ ink. The quinacridone pigment of the present invention has a reduced number of coarse particles, has excellent particle size stability, and can improve ejection performance as an IJ ink. Thus, the quinacridone pigment of the present invention is useful especially for aqueous IJ ink uses. Description of Embodiments

The following describes the present invention in detail.

<Quinacridone Pigment>

The quinacridone pigment of the present invention has a specific surface area ratio between water vapor and nitrogen of 0.270 or more and less than 0.430. The specific surface area ratio between water vapor and nitrogen is preferably 0.280 or more and 0.420 or less, more preferably 0.290 or more and 0.410 or less, particularly preferably 0.290 or more and 0.370 or less, and most preferably 0.300 or more and 0.370 or less. The specific surface area ratio is within the above range, thus the quinacridone pigment of the present invention can achieve both ink viscosity stability and the saturation of printed matter especially when used as an aqueous IJ ink. The water vapor/nitrogen specific surface area ratio can be calculated by measuring the water vapor specific surface area and the nitrogen specific surface area of the pigment using a specific surface area and pore distribution measurement apparatus, with water vapor and nitrogen gas used as adsorbents, and taking the ratio between these areas.

The water vapor specific surface area is normally 5 to 50 $m^2/g$, preferably 10 to 40 $m^2/g$, and more preferably 15 to 35 $m^2/g$. The nitrogen specific surface area is normally 30 to 120 $m^2/g$, preferably 40 to 100 $m^2/g$, and more preferably 60 to 90 $m^2/g$.

Examples of the pigment type of the quinacridone pigment include C.I. Pigment Red 122, C.I. Pigment Violet 19, C.I. Pigment Violet 42, C.I. Pigment Violet 55, C.I. Pigment Red 202, C.I. Pigment Red 206, C.I. Pigment Red 207, C.I.

Pigment Red 209, C.I. Pigment Orange 48, C.I. Pigment Orange 49 and a solid solution of these quinacridone pigments. In the present invention, the quinacridone pigment is C.I. Pigment Violet 19, or a solid solution of C.I. Pigment Red 122 and C.I. Pigment Violet 19, since thus the effects of the present invention can be easily obtained. These quinacridone pigments may be used alone or in combination of two or more.

The primary particle size of the quinacridone pigment of the present invention is, for example, 50 to 500 nm and preferably 50 to 250 nm.

The quinacridone pigment of the present invention can be suitably used for IJ inks and, especially as an aqueous pigment dispersion liquid dispersed using a pigment dispersant or the like, can be suitably used for aqueous IJ inks.

<Method for Producing Quinacridone Pigment>

The following describes an example of a method for producing the quinacridone pigment of the present invention. The quinacridone pigment of the present invention is only required to have a water vapor/nitrogen specific surface area ratio within the above range and is not limited to the one produced by the following method.

The quinacridone pigment of the present invention can be produced after passing through, for example, a pigment slurry production step, a pigment surface treatment step, and a posttreatment step.

The pigment slurry production step: a step of adding a quinacridone pigment as a raw material to a solvent and stirring the mixture to obtain a pigment slurry

The pigment surface treatment step: a step of adding an iron salt or copper salt and hydrogen peroxide to the pigment slurry and stirring the mixture to treat a pigment surface

The posttreatment step: a step of filtering the reaction solution and drying and pulverizing the residue

(Pigment Slurry Production Step)

First, in the pigment slurry production step, examples of the quinacridone pigment as the raw material include the pigment type described above, and quinacridone pigments commercially available or produced by known and customary methods can be used. The quinacridone pigment as the raw material may be an untreated pigment or a pigment derivative such as a quinacridone pigment sulfonic acid derivative, an amino group-containing quinacridone pigment derivative, and a phthalimidomethyl group-containing quinacridone pigment derivative or a quinacridone pigment with the pigment particle surface treated with a polymer such as a dispersant, a surfactant, rosin, and the like. After the pigment surface treatment step, other pigment particle surface treatment may be performed such as a pigment derivative such as a quinacridone pigment sulfonic acid derivative, an amino group-containing quinacridone pigment derivative, and a phthalimidomethyl group-containing quinacridone pigment derivative or a polymer such as a dispersant, a surfactant, rosin, and the like.

As the quinacridone pigment as the raw material, a quinacridone pigment that has undergone a pigmentation step and has been prepared in terms of pigment particle size and particle shape may be used, or quinacridone pigment crude with uneven pigment particle size and particle shape may be used and prepared by performing a pigmentation step after the pigment surface treatment step. As to the pigmentation step, one or any combinations can be selected from among, for example, the acid paste method, the acid slurry method, the dry milling method, the solvent method, and the solvent milling method.

As the solvent, water and/or an organic solvent can be used, and as the organic solvent, methanol, ethanol, n-propanol, 2-propanol, isobutyl alcohol, or the like can be used. In particular, water is preferred from an economic standpoint. Water may be pure water or industrial water, and buffer solutions such as an acetate buffer solution, a phosphate buffer solution, a citrate buffer solution, a citrate-phosphate buffer solution, a borate buffer solution, and a tartrate buffer solution may also be used.

The addition amount of the quinacridone pigment as the raw material is preferably 1 to 30 parts by mass with respect to 100 parts by mass of the solvent, and because productivity is low when the addition amount is small and the pigment slurry becomes highly viscous and excessive energy is required for stirring when the addition amount is large, the addition amount is more preferably 2 to 20 parts by mass and particularly preferably 3 to 12 parts by mass.

The temperature in the pigment slurry production step is preferably 0°C to 120°C. The temperature in the pigment surface treatment step is preferably 0°C to 100°C, and because the reaction rate of a pigment surface treatment reaction is low at low temperatures and decomposition of hydrogen peroxide is accelerated at high temperatures, the temperature is more preferably 10°C to 90°C and particularly preferably 20°C to 80°C.

(Pigment Surface Treatment Step)

Next, examples of the iron salt or copper salt used in the pigment surface treatment step include iron sulfate, iron chloride, iron fluoride, iron bromide, iron iodide, iron nitrate, iron phosphate, iron borate, iron carbonate, iron acetate, copper sulfate, copper chloride, copper sulfide, and copper oxide. Iron sulfate, iron chloride, and iron nitrate are preferred from an economic standpoint. Divalent iron or copper can be used as iron or copper. The iron salt and copper salt may be an anhydride or hydrate.

The iron salt is preferably added in an amount of 0.1 to 20% by mass with respect to the quinacridone pigment as the raw material. The iron salt acts as a catalyst for the pigment surface treatment reaction and is thus preferably 0.5 to 10% by mass because the reaction rate of the surface treatment reaction is low when the addition amount of the iron salt is small and excessive addition accelerates decomposition of hydrogen peroxide, which is economically disadvantageous.

The addition amount of hydrogen peroxide is preferably 1 to 40% by mass, more preferably 2 to 30% by mass, and particularly preferably 3 to 20% by mass with respect to the quinacridone pigment as the raw material. A small addition amount of hydrogen peroxide may result in insufficient treatment of the pigment surface, while a large amount may result in excessive modification of the pigment surface, resulting in deterioration of the hue (saturation) of the pigment. Hydrogen peroxide may be added as hydrogen peroxide water, which is diluted with water.

The iron salt and hydrogen peroxide may be added to the pigment slurry simultaneously or separately. When added simultaneously, hydrogen peroxide decomposes if hydrogen peroxide and the iron salt are mixed together in advance, and thus they are mixed together in the pigment slurry. When added separately, the iron salt may be added first or hydrogen peroxide may be added first. Hydrogen peroxide may be added dropwise or added in a single batch.

The reaction time for the pigment surface treatment step is preferably 10 minutes to 2 hours. The pH of a treatment liquid in the pigment surface treatment step is preferably pH 1 to 7 because alkalinity precipitates iron ions.

(Posttreatment Step)

Filtration, drying, and pulverization in the posttreatment step can be performed by methods normally used in pigment production.

<Pigment Dispersion>

The pigment dispersion of the present invention contains the quinacridone pigment of the present invention and a solvent. The solvent may be any of an organic solvent, water, a water-soluble solvent, and the like, but water and/or the water-soluble solvent are preferred. That is, the pigment dispersion of the present invention is preferably an aqueous pigment dispersion liquid from the standpoint that the effects of the quinacridone pigment of the present invention described above can be easily produced. Examples of the water-soluble solvent include alcohol components, and examples of the alcohol components include methanol, ethanol, isopropanol, and butanol. Apart from the alcohol components, the water-soluble solvent may contain components such as glycols such as diethylene glycol, propylene glycol, and triethylene glycol, glycerin, and lower alkyl ethers of polyhydric alcohols.

The pigment dispersion of the present invention can be produced by producing a highly concentrated aqueous dispersion liquid of the quinacridone pigment of the present invention (a pigment paste), diluting the resultant liquid with water and/or the water-soluble solvent, and adding other additives thereto as needed.

There is no particular limitation on the method for dispersing the quinacridone pigment of the present invention in the water and/or the water-soluble solvent to obtain the pigment paste, and the use of a known method of dispersion is preferred. As to a dispersant used in this process, the quinacridone pigment may be dispersed in water using a known pigment dispersant, or a surfactant may be used. As the pigment dispersant, aqueous resins are preferred, and preferred examples include polyvinyl alcohols, polyvinyl pyrrolidones, urethane resins having anionic groups or cationic groups, and radical copolymer resins having anionic groups or cationic groups. Examples of the radical copolymer resins having anionic groups or cationic groups include acrylic resins such as poly(acrylic acid-co-acrylate); styrene-acrylic resins such as poly(styrene-co-acrylic acid), poly(styrene-co-methacrylic acid), poly(styrene-co-methacrylic acid-co-acrylate), poly(styrene-co-α-methylstyrene-co-acrylic acid), and poly(styrene-co-α-methylstyrene-co-acrylic acid-co-acrylate); poly(styrene-co-maleic acid), poly(styrene-co-maleic anhydride), poly(vinylnaphthalene-co-acrylic acid), and salts of the aqueous resins.

Examples of compounds for forming the salts of the copolymers include alkali metal hydroxides such as sodium hydroxide, potassium hydroxide, and lithium hydroxide, and diethylamine, ammonia, ethylamine, triethylamine, propylamine, isopropylamine, dipropylamine, butylamine, isobutylamine, triethanolamine, diethanolamine, aminomethyl propanol, and morpholine. The use amount of these compounds for forming the salts are preferably equal to or greater than the neutralizing equivalent of the copolymers. It is also possible to use commercially available products as the compounds for forming the salts of the copolymers. Examples of the commercially available products include the Ajispur PB series manufactured by Ajinomoto Fine-Techno Co., Inc., the Disperbyk series and BYK-series from BYK-Chemie Japan K.K., and the EFKA series manufactured by BASF Japan Ltd.

Examples of the method of dispersion in the pigment dispersion liquid include the following (1) to (3).

(1) A method for preparing a pigment paste by adding a pigment to an aqueous medium containing a pigment dispersant and water and then dispersing the pigment in the aqueous medium using a stirring and dispersing apparatus.

(2) A method for preparing a pigment paste by kneading a pigment and a pigment dispersant using a kneader such as a two-roll or a mixer, adding the obtained kneaded product into an aqueous medium containing water, and using a stirring and dispersing apparatus.

(3) A method for preparing a pigment paste by adding a pigment to a solution obtained by dissolving a pigment dispersant in an organic solvent having compatibility with water, such as methyl ethyl ketone or tetrahydrofuran, then dispersing the pigment in the organic solution using a stirring and dispersing apparatus, then performing phase inversion emulsification using an aqueous medium, and then distilling off the organic solvent.

The kneader is not limited to a particular one, and examples thereof include Henschel mixers, pressure kneaders, Banbury mixers, and planetary mixers. The stirring and dispersing apparatus is not limited to a particular one either, and examples thereof include ultrasonic homogenizers, high-pressure homogenizers, paint shakers, ball mills, roll mills, sand mills, sand grinders, dyno mills, Dispermat, SC mills, and nanomizers. One of them may be used alone or two or more apparatuses may be used in combination.

The amount of the quinacridone pigment of the present invention in the pigment paste is preferably 5 to 60% by mass and more preferably 10 to 50% by mass. If the amount of the pigment is less than 5% by mass, there is a tendency that the aqueous ink prepared from the pigment paste is insufficiently colored and sufficient image density cannot be obtained. If the amount is more than 60% by mass, on the other hand, the dispersion stability of the pigment tends to reduce in the pigment paste.

Coarse particles cause nozzle clogging and other types of degradation of image characteristics, and thus it is preferable to remove coarse particles by centrifugal separation, filtration treatment, or the like before and after ink preparation.

After a dispersion step, an impurity removal step by ion exchange treatment or ultrafiltration treatment may be performed, and then posttreatment may be performed. The ion exchange treatment can remove ionic substances such as cations and anions (divalent metal ions and the like), and the ultrafiltration treatment can remove impurity dissolved substances (residual substances during pigment synthesis, excess components in the dispersion liquid composition, resins not adsorbed on the organic pigment, mixed foreign substances, and the like). For the ion exchange treatment, known ion exchange resins are used. For the ultrafiltration treatment, known ultrafiltration membranes are used, which may be either a normal type or a doubled capacity type.

<Aqueous IJ Ink>

The aqueous IJ ink of the present invention contains the pigment dispersion of the present invention. In addition to the pigment dispersion of the present invention, the aqueous IJ ink of the present invention may contain wetting agents (drying inhibitors), penetrating agents, surfactants, and the like as needed and preservatives, viscosity adjusters, pH adjusters, chelating agents, plasticizers, antioxidants, UV absorbers, and the like as other additives.

The wetting agents are added for the purpose of preventing drying of the ink. The content of the wetting agents for the purpose of preventing drying in the ink is preferably 3 to 50% by mass. There is no particular limitation as the wetting agents used in the present invention, but preferred is a wetting agent having miscibility with water and producing a clogging prevention effect on inkjet printer heads. Examples of the wetting agents include glycerin, ethylene glycol, diethylene glycol, triethylene glycol, polyethylene glycol with a molecular weight of 2,000 or less, propylene glycol, dipropylene glycol, tripropylene glycol, 1,3-propylene glycol, isopropylene glycol, isobutylene glycol, 1,4-butanediol, 1,3-butanediol, 1,5-pentanediol, 1,6-hexanediol, meso-erythritol, and pentaerythritol. Among these, containing propylene glycol and 1,3-butylene glycol has safety and produces excellent effects on ink drying properties and ejection performance.

The penetrating agents are added for the purpose of improving penetrability into media to be recorded and adjusting a dot diameter on recording media. Examples of the penetrating agents include lower alcohols such as ethanol and isopropyl alcohol; ethylene oxide adducts of alkyl alcohols such as ethylene glycol hexyl ether and diethylene glycol butyl ether; and propylene oxide adducts of alkyl alcohols such as propylene glycol propyl ether.

The surfactants are added in order to adjust ink properties such as surface tension. The surfactant that can be added for this purpose is not limited to a particular surfactant, and examples thereof include various anionic surfactants, nonionic surfactants, cationic surfactants, and amphoteric surfactants. Among these, anionic surfactants and nonionic surfactants are preferable.

Examples of the anionic surfactants include alkylbenzene sulfonates, alkylphenyl sulfonates, alkylnaphthalene sulfonates, higher fatty acid salts, sulfates of higher fatty acid esters, sulfonates of higher fatty acid esters, sulfates and sulfonates of higher alcohol ethers, higher alkyl sulfosuccinates, polyoxyethylene alkyl ether carboxylates, polyoxyethylene alkyl ether sulfates, alkyl phosphates, and polyoxyethylene alkyl ether phosphates, and specific examples thereof include dodecylbenzene sulfonate, isopropylnaphthalene sulfonate, monobutylphenylphenol monosulfonate, monobutylbiphenyl sulfonate, and dibutylphenylphenol disulfonate.

Examples of the nonionic surfactants include polyoxyethylene alkyl ethers, polyoxyethylene alkyl phenyl ethers, polyoxyethylene fatty acid esters, sorbitan fatty acid esters, polyoxyethylene sorbitan fatty acid esters, polyoxyethylene sorbitol fatty acid esters, glycerin fatty acid esters, polyoxyethylene glycerin fatty acid esters, polyglycerin fatty acid esters, sucrose fatty acid esters, polyoxyethylene alkylamines, polyoxyethylene fatty acid amides, fatty acid alkylolamides, alkyl alkanolamides, acetylene glycol, oxyethylene adducts of acetylene glycol, and polyethylene glycol-polypropylene glycol block copolymers, and preferred among these are polyoxyethylene nonylphenyl ether, polyoxyethylene octylphenyl ether, polyoxyethylene dodecylphenyl ether, polyoxyethylene alkyl ethers, polyoxyethylene fatty acid esters, sorbitan fatty acid esters, polyoxyethylene sorbitan fatty acid esters, fatty acid alkylolamides, acetylene glycol, oxyethylene adducts of acetylene glycol, and polyethylene glycol-polypropylene glycol block copolymers.

Other examples of the surfactant are silicone surfactants such as polysiloxane oxyethylene adducts; fluorosurfactants such as perfluoroalkyl carboxylates, perfluoroalkyl sulfonates, and oxyethylene perfluoroalkyl ethers; and biosurfactants such as spiculisporic acid, rhamnolipids, and lysolecithin.

These surfactants can be used alone or as a mixture of two or more. When the surfactant is added, the addition amount of the surfactant is preferably in a range of 0.001 to 2% by mass, more preferably 0.001 to 1.5% by mass, and even more preferably in a range of 0.01 to 1 % by mass with respect to the total mass of the ink. When the addition amount of the surfactant is less than 0.001% by mass, there is a tendency that the effect of the addition of the surfactant cannot be obtained, and when it is used in an amount more than 2% by mass, problems such as image blurring are likely to occur.

As to other additives such as preservatives, viscosity adjusters, pH adjusters, chelating agents, plasticizers, antioxidants, and UV absorbers, components normally used in IJ uses can be moderately contained.

There is no particular limitation on the physical properties of the ink, but in consideration of its ejection properties as an IJ ink, at a measured temperature of 25°C, the viscosity is preferably 1 to 10 (mPa·s), the surface tension is preferably 20 to 50 (mN/m), and the pigment concentration is preferably 1 to 10% by mass.

The aqueous IJ ink of the present invention is obtained by further adding a water-soluble solvent and/or water, an anionic group-containing organic polymer compound for the purpose of a binder, and the like to the pigment dispersion of the present invention and adding and preparing a wetting agent (a drying inhibitor), a penetrating agent, or other additives as needed for desired properties. After ink preparation, a centrifugation or filtration treatment step may be added.

[Examples]

The following describes the present invention in more detail with reference to examples and comparative examples. In the following examples and comparative examples, unless otherwise noted, "%" represents "% by mass."

In the present examples, first, a quinacridone pigment was produced, the specific surface area ratio between water vapor and nitrogen was measured. Next, a pigment dispersion and an IJ ink were prepared, printing evaluation and initial viscosity measurement of the IJ ink were performed, and finally, viscosity measurement after one week at 70°C was performed in order to evaluate storage stability. The following describes details. In the present examples, the specific surface area ratio between water vapor and nitrogen is referred to as a "water vapor/nitrogen specific surface area ratio."

In the present examples, for the measurement of the specific surface area ratio between water vapor and nitrogen of the quinacridone pigment, a specific surface area and pore distribution measurement apparatus (BELPREP-vacII manufactured by MicrotracBEL Corporation) was used. After being pretreated under reduced pressure at 100°C for 2 hours, a sample was mounted on the apparatus, and an adsorbent was adsorbed and desorbed to and from the sample while changing relative pressure. By using water vapor and nitrogen gas as the adsorbent, the water vapor specific surface area and the nitrogen specific surface area of the pigment were measured. By taking the ratio between these areas, the water vapor/nitrogen specific surface area ratio was calculated.

[Production of Quinacridone Pigment: Reference Example 1]

C.I. Pigment Red 122 (manufactured by DIC Corporation) wet cake in an amount of 200 parts (with a pigment content of 50 parts) and 800 parts of ion exchanged water were put into a 2 L stainless cup and were stirred with a stainless anchor blade at a number of revolutions of 150 rpm for 30 minutes. Iron(II) sulfate heptahydrate (manufactured by FUJIFILM Wako Pure Chemical Corporation) in an amount 0.4 part was added thereto, and the mixture was heated up to 60°C. Subsequently, 17.3 parts of 30% hydrogen peroxide water (FUJIFILM Wako Pure Chemical Corporation) was added thereto, and the mixture was stirred at 60°C for 60 minutes. Next, the slurry was Nutsche filtered and was washed with warm water at 70°C, and then the residue was dried in a blast constant-temperature dryer for a whole day and night. The obtained pigment mass was pulverized to obtain a quinacridone pigment. Its water vapor/nitrogen specific surface area ratio was measured to be 0.290.

[Production of Quinacridone Pigment: Example 1]

A quinacridone pigment was obtained in the same manner as in Reference Example 1 except that C.I. Pigment Red 122 (manufactured by DIC Corporation) wet cake in Reference Example 1 was changed to C.I. Pigment Violet 19 (manufactured by DIC Corporation) wet cake, 0.4 part as the amount of iron(II) sulfate heptahydrate (manufactured by FUJIFILM Wako Pure Chemical Corporation) was changed to 0.5 part, and 17.3 parts as the amount of 30% hydrogen peroxide water (manufactured by FUJIFILM Wako Pure Chemical Corporation) was changed to 8.7 parts. Its water vapor/nitrogen specific surface area ratio was 0.362.

[Production of Quinacridone Pigment: Example 2]

A quinacridone pigment was obtained in the same manner as in Reference Example 1 except that C.I. Pigment Red 122 (manufactured by DIC Corporation) wet cake in Reference Example 1 was changed to a solid solution (manufactured by DIC Corporation) wet cake with a ratio between C.I. Pigment Red 122 and C.I. Pigment Violet 19 of 8:2. Its water vapor/nitrogen specific surface area ratio was 0.301.

[Production of Quinacridone Pigment: Comparative Example 1]

C.I. Pigment Red 122 (DIC Corporation) wet cake was dried in a blast constant-temperature dryer for a whole day and night. The obtained pigment mass was pulverized to obtain a quinacridone pigment. Its water vapor/nitrogen specific surface area ratio was measured to be 0.229.

[Production of Quinacridone Pigment: Comparative Example 2]

C.I. Pigment Violet 19 (DIC Corporation) wet cake was dried in a blast constant-temperature dryer for a whole day and night. The obtained pigment mass was pulverized to obtain a quinacridone pigment. Its water vapor/nitrogen specific surface area ratio was measured to be 0.266.

[Production of Quinacridone Pigment: Comparative Example 3]

A quinacridone pigment was obtained in the same procedure except that C.I. Pigment Red 122 (manufactured by DIC Corporation) wet cake in Reference Example 1 was changed to C.I. Pigment Violet 19 (manufactured by DIC Corporation) wet cake, 0.4 part as the amount of iron(II) sulfate heptahydrate (manufactured by FUJIFILM Wako Pure Chemical Corporation) was changed to 2.3 parts, and 17.3 parts as the amount of 30% hydrogen peroxide water (manufactured by FUJIFILM Wako Pure Chemical Corporation) was changed to 41.7 parts. Its water vapor/nitrogen specific surface area ratio was 0.430.

[Production of Quinacridone Pigment: Comparative Example 4]

A solid solution (manufactured by DIC Corporation) wet cake with a ratio between C.I. Pigment Red 122 and C.I. Pigment Violet 19 of 8:2 was dried in a blast constant-temperature dryer for a whole day and night. The obtained pigment mass was pulverized to obtain a quinacridone pigment. Its water vapor/nitrogen specific surface area ratio was measured to be 0.210.

[Production of Quinacridone Pigment: Comparative Example 5]

A quinacridone pigment was obtained in the same manner as in Reference Example 1 except that 17.3 parts as the amount of 30% hydrogen peroxide water (manufactured by FUJIFILM Wako Pure Chemical Corporation) in Reference Example 1 was changed to 2.2 parts. Its water vapor/nitrogen specific surface area ratio was measured to be 0.252.

<Production of Pigment Dispersion>

Put into a 100 mL polyethylene widemouthed bottle were 10.0 parts by mass of the quinacridone pigment obtained above, 7 parts by mass (with a resin content of 3 parts by mass) of a styrene-acrylic resin (manufactured by DIC Corporation) with an acid value of 170 mgKOH/g, 10 parts by mass of a 5% by mass aqueous potassium hydroxide solution, 73 parts by mass of ion exchanged water, and 250 parts of 0.5 mm zirconia beads, which were dispersed with a paint shaker (manufactured by Toyo Seiki Seisaku-sho, Ltd.) for 2 hours.

Subsequently, the obtained pigment dispersion liquid was centrifuged using a high-speed centrifuge at 6,000 G for 30 minutes, and the supernatant was collected to obtain an aqueous pigment dispersion with a pigment concentration of 9.5% by mass.

[Production of IJ Ink]

Mixed together were 42 parts by mass of the aqueous pigment dispersion obtained above, 1 part by mass of a surfactant (Surfynol 465), 15 parts by mass of glycerin as a wetting agent, 10 parts by mass of propylene glycol, and ion exchanged water in an amount giving a total mass of 100 to obtain an aqueous IJ ink with a pigment concentration of 4% by mass.

[Printing Evaluation (Saturation Change Rate)]

The IJ ink obtained above was filled into an inkjet printer PX-105 (manufactured by Seiko Epson Corporation) and was subjected to printing of a 100% duty pattern. As a recording medium, Canon Photo Paper, Glossy Gold GL-101A450 (manufactured by Canon Inc.) was used for printing, and the obtained sample was left in a general environment for 12 hours. After being left, a* and b* were measured under the conditions with D50/2 as a light source and M3 as a filter using X-Rite Exact (manufactured by X-Rite Inc.) to calculate saturation (c*).
Using a sample with the same pigment wet cake as a base material without surface treatment as a standard, a printed matter saturation change rate (%) due to surface treatment was calculated based on the following expression and was evaluated based on the following criteria.

Printed matter saturation change rate (%) = [{ (saturation of printed matter with surface-treated pigment) - (saturation of printed matter with non-surface-treated pigment)}/(saturation of printed matter with non-surface-treated pigment)] $\times$ 100

◎: 0% to -3%
O: less than -3% to -5%
X: less than -5%

[Evaluation of Ink Viscosity Stability (Viscosity Change Rate)]

The viscosity of the IJ ink immediately after being produced by the above method was measured using an E type viscometer in an environment of 20°C (initial viscosity).
Next, 10 mL of the aqueous ink was put into a glass container, and the glass container was sealed and was left at rest at 70°C for one week. The viscosity of the IJ ink after being left at rest was measured using an E type viscometer.
A viscosity change rate (%) from the aqueous ink viscosity immediately after being produced (initial viscosity) was calculated based on the following expression and was evaluated based on the following criteria.

Viscosity change rate (%) = [{ (the viscosity of the aqueous ink after being left at rest) - (the viscosity of the aqueous ink immediately after being produced)}/(the viscosity of the aqueous ink immediately after being produced)] $\times$ 100

◎: less than $\pm$20%
O: $\pm$20% or more and less than $\pm$50%
X: $\pm$50% or more

[Table 1]

|  | Ref. Ex. 1 | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|---|
| Pigment type | R.122 | V.19 | R.122 /V.19 | R.122 | V.19 | V.19 | R.122 /V.19 | R.122 |
| Water vapor/ nitrogen specific surface area ratio | 0.290 | 0.362 | 0.301 | 0.229 | 0.266 | 0.430 | 0.210 | 0.252 |

(continued)

| | Ref. Ex. 1 | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|---|
| Saturation change rate | ◎ | ◎ | ◎ | ◎ | ◎ | X | ◎ | ◎ |
| viscosity change rate | ◎ | ◎ | O | X | X | ◎ | X | X |

As listed in Table 1 above, the quinacridone pigments with a specific surface area ratio between water vapor and nitrogen of 0.270 or more and less than 0.430 in Reference Example 1 and Examples 1 and 2 showed good results in both the saturation change rate and the ink viscosity change rate regardless of the pigment type. On the other hand, the quinacridone pigments with a water vapor/nitrogen specific surface area ratio outside the above range in Comparative Examples 1 to 5 showed poor results in either the saturation change rate or the ink viscosity change rate regardless of the pigment type.

## Claims

1. A quinacridone pigment with a specific surface area ratio between water vapor and nitrogen of 0.270 or more and less than 0.430, as determined in accordance with the method disclosed in the description, wherein the quinacridone pigment is C.I. Pigment Violet 19 or a solid solution of C.I. Pigment red 122 and C.I. Pigment Violet 19.

2. A pigment dispersion comprising the quinacridone pigment according to claim 1 and a solvent.

3. An aqueous inkjet ink comprising the pigment dispersion according to claim 2.

## Patentansprüche

1. Ein Chinacridonpigment mit einem spezifischen Oberflächenflächenverhältnis zwischen Wasserdampf und Stickstoff von 0,270 oder mehr und weniger als 0,430, wie in Übereinstimmung mit dem in der Beschreibung offenbarten Verfahren bestimmt, wobei das Chinacridonpigment C.I. Pigment Violet 19 oder ein Mischkristall aus C.I. Pigment Red 122 und C.I. Pigment Violet 19 ist.

2. Pigmentdispersion, umfassend das Chinacridonpigment nach Anspruch 1 und ein Lösungsmittel.

3. Wässrige Tintenstrahltinte, umfassend die Pigmentdispersion nach Anspruch 2.

## Revendications

1. Pigment de quinacridone ayant un rapport de surface spécifique entre la vapeur d'eau et l'azote de 0,270 ou plus et inférieur à 0,430, tel que déterminé selon le procédé divulgué dans la description, dans lequel le pigment de quinacridone est C.I. Pigment Violet 19 ou une solution solide de C.I. Pigment Red 122 et C.I. Pigment Violet 19.

2. Dispersion de pigment comprenant le pigment de quinacridone selon la revendication 1 et un solvant.

3. Encre aqueuse pour jet d'encre comprenant la dispersion de pigment selon la revendication 2.

**EP 4 417 653 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006126440 A

- JP 2003201419 A